# EUROPEAN PATENT APPLICATION

(11) **EP 1 707 444 A1**
(43) Date of publication of application: **04.10.2006**
(21) Application number: 06006250.2
(22) Date of filing: 27.03.2006
(51) Int. Cl.: B60R 19/34

(54) **Impact absorbing apparatus**

(30) Priority: 01.04.2005 GB 0506669
(71) Applicant: Wagon Industrial Limited, Warwick CV34 6WG (GB)
(72) Inventor: Tomlin, Matthew Lee, Warwick CV34 6WG (GB); Harrison, Tom Copeman, Warwick CV34 6WG (GB); Legge, Martin Clifford, Warwick CV34 6WG (GB)
(74) Representative: Shaw, Matthew Nigel

(57) **Abstract**

An impact absorbing apparatus for a vehicle comprising a deformable crush can 40 which, in use, is disposed between a vehicle bumper beam 30 and a longitudinal member 60 of the vehicle chassis, a rearward part of the crush can 40 being engageable with a mounting member 50 which is locatable within a forward part of the longitudinal member 60 such that the crush can 40 is at least partially disposed within the longitudinal member 60.

## Description

### Description of Invention

The present invention relates to an impact absorbing apparatus and relates, particularly, although not exclusively, to an impact absorbing apparatus for a motor vehicle such as a car.

Crash protection systems for motor vehicles have evolved to meet increasingly demanding safety standards imposed by regulations and by vehicle manufacturers' own specifications. Efforts, hitherto, have mainly been directed to improving the safety of occupants of a vehicle's passenger cell in the event of a vehicle impact, although limiting the amount of damage suffered by a vehicle's main structure is also important, hence the common use of 'crush cans', otherwise known as 'crash boxes' in vehicle chassis design. Thus, systems such as airbags, side impact protection systems and crumple zones have become commonplace, improving the safety of vehicle passengers. More recently, efforts have focused on reducing the rate of death and injury to pedestrians in the event of a vehicle/pedestrian collision. In order to meet the relevant required standards, vehicle manufacturers have typically provided energy-absorbing material such as foam in the space between a front fascia ('skin') of a vehicle bumper and the bumper beam itself, so that if the vehicle collides with a pedestrian, at least some of the energy of the impact will be absorbed by the foam, thus reducing the likelihood of causing death or injury to the pedestrian. Inclusion of such foams and the like can also reduce damage to the bumper beams themselves, in the event of low-speed 'parking collisions', for example. Increasing the amount of foam generally results in an increased (and thus beneficial) amount of energy absorption, but in many vehicles, the amount of space available behind the bumper fascia is limited. One way of increasing the amount of space available for the energy-absorbing foam, is to extend a front part of the vehicle. In extending the front part of the vehicle in this way, the amount of space available between a forward part of a longitudinal member of the vehicle (such as the chassis rail) and the bumper beam, known as the vehicle's 'package space', which is often occupied by safety devices, remains unchanged, with additional space being created between the front fascia of the bumper and the bumper beam. However, vehicle manufacturers can be reluctant to incur the expense involved in altering the design of vehicles in this way, and technical and aesthetic considerations may preclude such alterations to the design of vehicles, in any event.

In accordance with a first aspect of the present invention, there is provided an impact absorbing apparatus for a vehicle comprising a deformable crush can which, in use, is disposed between a vehicle bumper beam and a longitudinal member of the vehicle chassis, a rearward part of the crush can being engageable with a mounting member which is locatable within a forward part of the longitudinal member such that the crush can is at least partially disposed within the longitudinal member.

In this way, the amount of space occupied by the impact-absorbing apparatus, forwardly of the longitudinal member, is reduced, allowing a greater quantity of energy-absorbing foam to be provided behind a fascia of the vehicle's bumper, for example.

The mounting member may be generally C-shaped or U-shaped in profile, having side walls and an end wall, with an opening being provided, generally opposite the end wall. The side walls may be generally parallel and the end wall may connect the side walls.

Alternatively, the mounting member may comprise more than two side walls such that the mounting member is generally cup- or dish-shaped. The end wall may have the same or a substantially-similar shape as the longitudinal cross-section of the longitudinal member, so as to be receivable closely within it.

Thus, for example, if the longitudinal member were square in cross-section, the mounting member might comprise a generally square end wall, perhaps connected to four side walls. On the other hand, if the longitudinal member were hexagonal in cross-section, the mounting member might comprise a hexagonal end wall, and six side walls.

The end wall of the mounting member may be strengthened or reinforced, in relation to the rest of the mounting member, to ensure that it remains substantially undeformed in the event of certain impacts. This, in turn, allows maximum deformation of the crush can to occur, and thus maximum energy absorption by the crush can.

To that end, the end wall may be of a greater thickness than the side walls.

The mounting member may comprise an engagement member such as a flange extending transversely (conveniently substantially at 90 degrees) to free ends of the side walls, the engagement member being engageable with an end part of the longitudinal member so as to attach the mounting member thereto.

The crush can may comprise a hollow, generally cylindrical, tube having a generally annular ridge such that, in the event of an impact, the annular ridge may be compressed, allowing deformation of the crush can to occur in a predictable and controlled manner. Multiple ridges may be provided.

The crush can may further comprise an annular groove positioned adjacent the or each annular ridge, the groove being generally co-axial with the ridge to aid the controlled deformation of the crush can. Multiple grooves may be provided, each one adjacent a corresponding ridge, thus giving rise to a somewhat 'concertina'-shaped tube.

Alternatively, the crush can may comprise a hollow, generally conical or frusto-conical formation, optionally having at least one ridge/groove, as discussed above.

In accordance with a second aspect of the invention, there is provided a mounting member for a vehicle crush can, at least part of the mounting member being locatable within a longitudinal member of the vehicle such that, the crush can is at least partially disposed within the longitudinal member.

The mounting member and crush can may be in accordance with any of the preceding paragraphs.

In accordance with a third aspect of the invention, there is provided a method of adapting a vehicle to decrease the vehicle's package space comprising installing a mounting member in an open, forward end of a longitudinal member of the vehicle and engaging a deformable crush can therewith such that at least part of the crush can is disposed within an end of the longitudinal member.

The mounting member and crush can may be in accordance with any of the preceding paragraphs.

Specific and non-limiting embodiments of the invention, in its various aspects, will now be described in greater detail, strictly by way of example only, by reference to the accompanying drawings, of which:
FIGURE 1 is a perspective view of a vehicle bumper arrangement incorporating a generally conventional impact absorbing apparatus ;
FIGURE 2 is an exploded rear perspective view of an impact absorbing apparatus according to the present invention;
FIGURE 3 is a side view of an impact absorbing apparatus according to the present invention;
FIGURE 4 is an exploded perspective view showing an impact absorbing device according to the present invention installed in a longitudinal chassis beam of a vehicle;
FIGURE 5 is a front perspective view of an alternative embodiment of an impact absorbing apparatus according to the present invention; and
FIGURE 6 is a front perspective view of a mounting member used in the alternative embodiment.

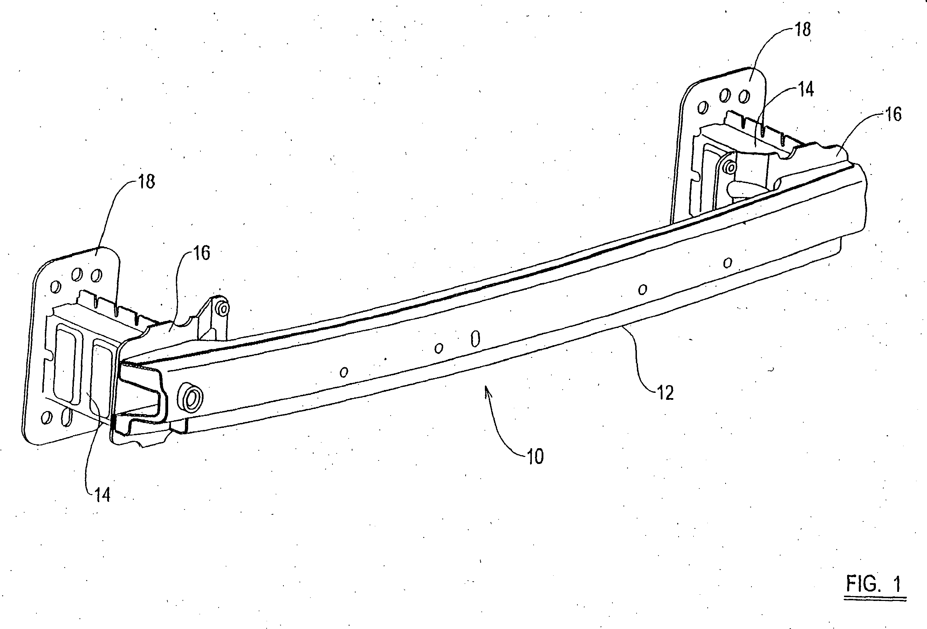

Referring firstly to Fig.1, a vehicle bumper arrangement including a generally conventional impact absorbing apparatus is shown generally at 10, and comprises a bumper beam 12 and two crush cans (or 'crash boxes') 14. The crush cans 14 are provided with mounting plates 16 at their front ends, with the bumper beam 12 being attached to the crush cans 14 by the mounting plates 16. The crush cans 14 are also provided, at their rear ends, with back (mounting) plates 18 which are attached, in generally conventional manner, to a rigid part of a vehicle structure, for example a longitudinal member such as a chassis beam. This bumper arrangement may be installed in a vehicle, with the bumper beam 12 being disposed towards the front of the vehicle. A bumper fascia is generally provided forwardly of the bumper beam 12 to give the vehicle a visually appealing appearance. Impact-absorbing foam may be provided, if sufficient space exists, between a rear side of the bumper fascia and the bumper beam, to absorb at least some of the energy of an impact between the vehicle and a pedestrian, for example, thus reducing the risk of serious injury to the pedestrian.

In the event of a sufficiently-forceful impact between a vehicle equipped with the bumper arrangement of Fig. 1 and another vehicle or a stationary object, one or both of the crush cans 14 may deform by compressing, thus absorbing at least some of the energy of the impact and reducing the likelihood of death or injury to occupants of the vehicle. In addition, the crush cans 14 offer some protection to the vehicle's chassis, so that it may be possible, after an impact, to repair the vehicle simply by replacing the bumper assembly 10 and associated bodywork, without needing to repair the chassis, which is often prohibitive, in terms of cost.

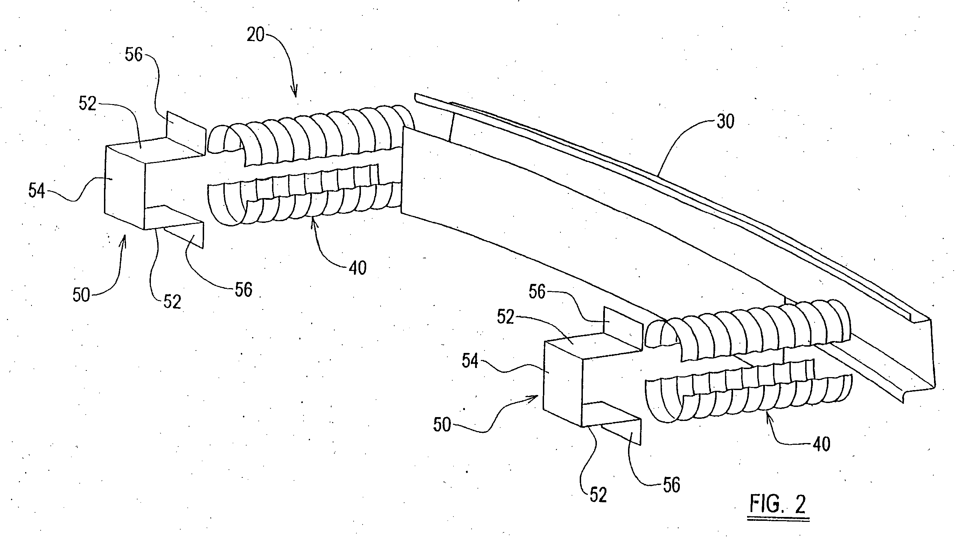

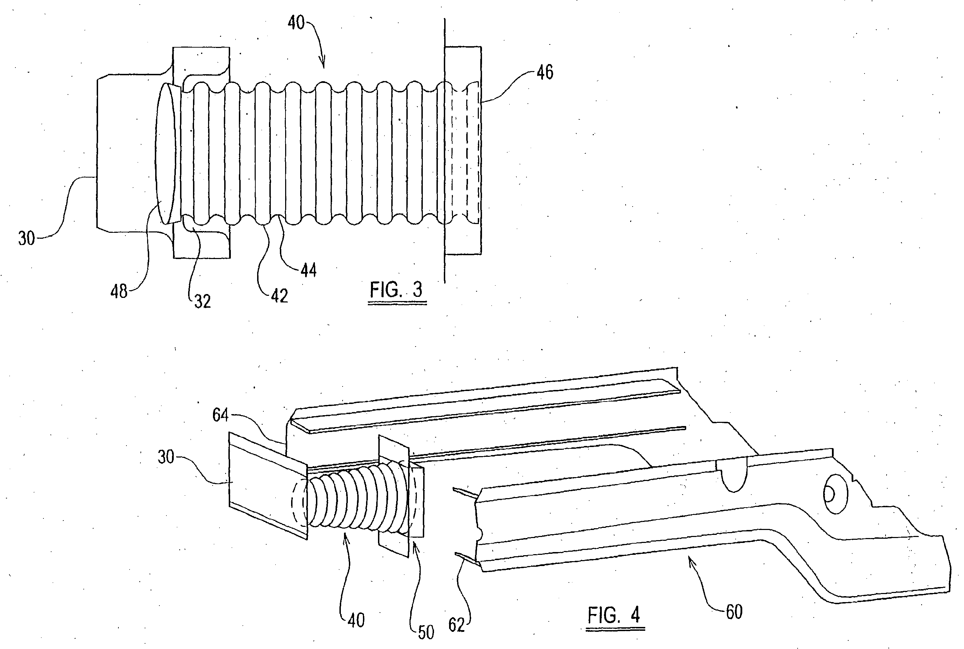

Turning next to Figs. 2 and 3, an embodiment of an impact absorbing apparatus according to the present invention is shown generally at 20, and comprises a bumper beam 30, two crush cans 40 and two mounting members 50.

The bumper beam 30 can be made of any suitable material, for example steel or aluminium, and can be formed in any convenient manner. In this example, high strength sheet steel is roll-formed into the elongate and somewhat concave configuration shown.

Each crush can 40 is generally hollow and generally cylindrical, conical or frusto-conical in shape, and is formed with a plurality of annular ridges 42 which are centred on a longitudinal axis of the crush can 40 and which extend along substantially the entire length of the crush can, as shown in Fig. 3. Annular grooves 44 centred on the longitudinal axis are provided adjacent each annular ridge 42, giving an overall 'concertina' shape.

The crush can 40 may be made from any suitable material, for example mild steel, high strength steel or aluminium. The crush can may be manufactured by pressing, stamping or roll-forming sheet material into two generally semicylindrical or semi-conical halves which are then joined together along their longitudinal edges by welding or any other suitable means. Alternatively, the crush can 40 may be manufactured by hydro-forming a cylinder of material, a method which comprises placing the cylinder in a die formed with a 'negative' of a desired pattern of ridges 42 and grooves 44 and pumping pressurised water or other fluid into the die so that the cylinder is forced to take on the desired shape.

The mounting members 50 are generally C-shaped in cross-section, each having two generally parallel side walls 52 connected by an end wall 54. Each of the mounting members 52 is provided with flanges 56 which extend at generally 90 degrees from free ends of the side walls 52.

Turning now to Fig. 4, there is shown an exploded perspective view of the impact absorbing apparatus 10 installed in a vehicle. The mounting member is received in an open end 62 of a generally hollow longitudinal chassis beam 60 of the vehicle, with the flange 56 being securely attached to an outer edge 64 of the chassis beam 60 by welding, bolting or any other convenient means. Alternatively, the chassis beam 60 may include a flange at its open end to which the flange 56 of the mounting member 50 may be attached by welding, riveting, bolting or any other suitable method.

A rear end 46 of the crush can 40 is attached by welding or any other suitable method to an inner face of the end wall 54 of the mounting member 50. Thus, part of the crush can is received within the hollow longitudinal chassis beam 60, as shown in Fig. 3.

A front end 48 of the crush can 40 is attached to a rear part of the bumper beam 30, again by welding or any other suitable method. The front end 48 of the crush can 40 should preferably be attached to a substantially flat surface, and thus, if the rear surface of the bumper beam 30 is, for example, curved or ridged, an intermediate element such as a mounting plate (not shown) may be used to provide the required flat surface to which the front end 48 of the crush can 40 is attached. However, the applicants have found that the apparatus is particularly effective if the front end 48 of the crush can 40 engages directly with an inner face of the bumper beam 30, such that part of the crush can 40 is received within and attached to a hollow part 32 of the bumper beam 30, as shown in Fig. 3. This direct attachment of the front end 48 of the crush can 40 to the inner face of the bumper beam 30 prevents or reduces undesired relative movement between the bumper beam 30 and the crush can 40 in the event of an impact, thus ensuring that the crush can 40 begins to deform as soon as the impact occurs. Where an intermediate mounting plate is provided, such deformation of the crush can may be hindered, and the overall package space may also, of course, be increased.

In the event of an impact between a vehicle equipped with the impact absorbing apparatus and another vehicle or a stationary object, the crush can 40 absorbs at least some of the energy of the impact by deforming, thus reducing the likelihood of death or injury to passengers of the vehicle and damage to the vehicle chassis. The provision of the annular ridges 42 and grooves 44 assists this deformation, as the ridges 42 and the grooves 44 fold inwardly, facilitating a predictable collapse of the crush can 40. Where a generally conical or frusto-conical crush can 40 is used the crush can 40 collapses inwardly on itself, with the smaller diameter (usually front) end collapsing into the larger diameter (usually rear) end. The applicants have also found that the provision of the ridges 42 and grooves 44 may be beneficial if the impact occurs when the vehicle is at an angle to the object with which it collides (i.e. if the impact is not 'head-on'), as the crush can 40 deforms, in such a way as to 'direct' or 'guide' the deformation towards a generally longitudinal axis of the crush can 40, such that the crush can 40 deforms to its maximum extent, thus ensuring that a maximum amount of the energy of the impact is absorbed by the crush can 40.

The impact-absorbing apparatus 10 offers further energy absorption in that, if the crush can 40 has deformed to its maximum extent (i.e. is completely crushed), the rear wall 54 of the mounting member 50, may also deform slightly to absorb some of the remaining energy of the impact. However, it is important that the rear wall 54 of the mounting member 50 remains substantially rigid until the crush can 40 has deformed to its maximum extent, and thus the rear wall 54 may be reinforced to prevent it from deforming prematurely. Similarly, it is important that the flange 56 of the mounting member 50 does not become detached from the edge 64 of the longitudinal chassis beam in the event of an impact, and thus means may be provided to strengthen the attachment between the flange 56 and the edge 64.

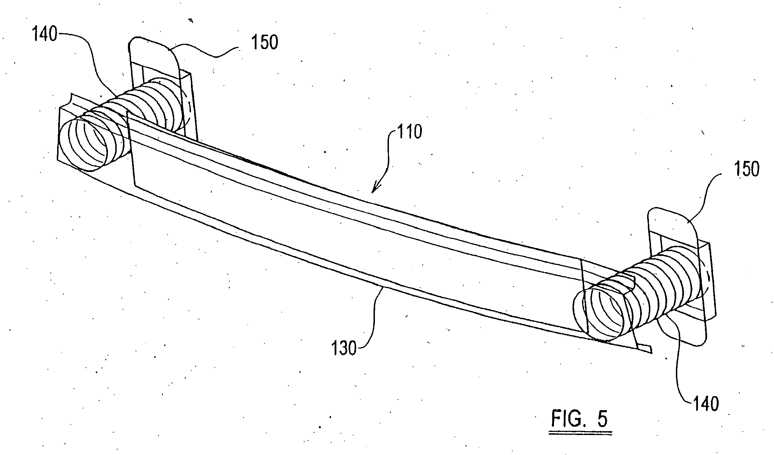

Referring now to Fig. 5, an alternative embodiment of the impact absorbing apparatus is shown generally at 110, and comprises a bumper beam 130, two crush cans 140 and two mounting members 150.

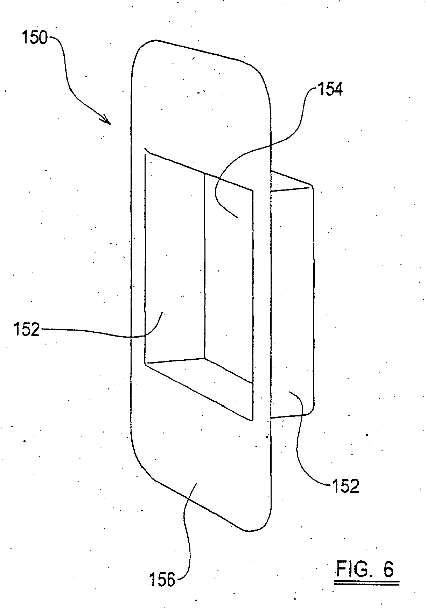

The mounting member 150 is shown in more detail in Fig. 6, and comprises, in this example, four side walls 152 connected by an end wall 154 to form an open-ended box- or dish-shaped formation. A continuous flange 156 extends around the open end of the box- or dish-shaped formation at about, 90 degrees from the free ends of the side walls 152. The mounting member 150 may be formed in any convenient way, for example by drawing or pressing sheet metal.

The bumper beam 130, crush cans 140 and mounting members 150 are connected together substantially as described above, with the mounting member being received within an open end 62 of the hollow longitudinal chassis beam, the continuous flange 156 being welded or otherwise attached to the edge 64 of the open end 62 of the beam 60. The use of the continuous flange 156 strengthens the attachment of the flange 156 to the beam 60, thus reducing the risk of the mounting member 150 becoming detached from the beam 60 in the event of an impact.

In this example, the end wall 154 is generally rectangular, so that the mounting member 150 is receivable within a hollow chassis beam 60 of rectangular cross-section. However, the end wall 154 may be any other shape, so as to be receivable within a hollow chassis beam of a corresponding cross-sectional shape. Thus, if a vehicle to which the impact-absorbing apparatus 110 were to be fitted had chassis beams of hexagonal cross-section, the mounting member could have a corresponding hexagonal end wall 154 and six side walls 152.

By using an impact absorbing apparatus according the present invention, a space between the end of the longitudinal chassis beam and the rear of the bumper fascia, known in the art as the 'package space', can be reduced in comparison to vehicles which use conventional impact absorbing systems, thus allowing the overall length of the front of the vehicle to be reduced. However, the reduction in space occupied by the impact absorbing apparatus 10, in comparison to conventional impact absorption systems, also allows vehicle designers, if they wish, to increase the amount of impact-absorbing foam provided between the bumper fascia and the bumper beam for a given package space, thus reducing the likelihood that a pedestrian struck by the vehicle will be killed or seriously injured. Reducing the package space in this way also increases the amount of space available rearwardly of the bumper fascia for accessories such as fog lamps, sensors for parking assistance systems and the like.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An impact absorbing apparatus for a vehicle comprising a deformable crush can which, in use, is disposed between a vehicle bumper beam and a longitudinal member of the vehicle chassis, a rearward part of the crush can being engageable with a mounting member which is locatable within a forward part of the longitudinal member such that the crush can is at least partially disposed within the longitudinal member.

2. An impact absorbing apparatus according to claim 1 wherein the mounting member is generally C-shaped or U-shaped in profile, having side walls and an end wall, with an opening being provided, generally opposite the end wall.

3. An impact absorbing apparatus according to claim 2 wherein the side walls are generally parallel.

4. An impact absorbing apparatus according to claim 2 or claim 3 wherein the end wall connects the side walls.

5. An impact absorbing apparatus according to any one of the preceding claims wherein the mounting member comprises more than two side walls such that the mounting member is generally cup- or dish-shaped.

6. An impact absorbing apparatus according to any of the preceding claims wherein the end wall has the same or a substantially-similar shape as the longitudinal cross-section of the longitudinal member, so as to be receivable closely within it.

7. An impact absorbing apparatus according to any of the preceding claims wherein the end wall of the mounting member is strengthened or reinforced, in relation to the rest of the mounting member.

8. An impact absorbing apparatus according to claim 7 wherein the end wall is of a greater thickness than the side walls.

9. An impact absorbing apparatus according to any of claims 2 to 8 wherein the mounting member comprises an engagement member extending transversely to free ends of the side walls, the engagement member being engageable with an end part of the longitudinal member so as to attach the mounting member thereto.

10. An impact absorbing apparatus according to claim 9 wherein the engagement member is a flange.

11. An impact absorbing apparatus according to claim 9 or claim 10 wherein the engagement member extends substantially at 90 degrees to the free ends of the side walls.

12. An impact absorbing apparatus according to any of the preceding claims wherein the crush can comprises a hollow, generally cylindrical, tube having a generally annular ridge.

13. An impact absorbing apparatus according to claim 12 wherein the crush can has multiple ridges.

14. An impact absorbing apparatus according to claim 12 or claim 13 wherein the crush can further comprises an annular groove positioned adjacent the or each annular ridge, the groove being generally co-axial with the ridge.

15. An impact absorbing apparatus according to claim 15 wherein the crush can has multiple grooves, each one adjacent a corresponding ridge.

16. An impact absorbing apparatus according to any of claims 1 to 11 wherein the crush can comprises a hollow, generally conical or frusto-conical formation having a generally annular ridge.

17. An impact absorbing apparatus according to claim 16 , wherein the crush can has multiple ridges.

18. An impact absorbing apparatus according to claim 16 or claim 17 wherein the crush can further comprises an annular groove positioned adjacent the or each annular ridge.

19. An impact absorbing apparatus according to claim 18 wherein the crush can has multiple grooves, each one adjacent a corresponding ridge.

20. A mounting member for a vehicle crush can, at least part of the mounting member being locatable within a longitudinal member of the vehicle such that, the crush can is at least partially disposed within the longitudinal member.

21. A mounting member for a vehicle crush can further comprising any of the features of claims 2 to 11.

22. A method of adapting a vehicle to decrease the vehicle's package space comprising installing a mounting member in an open, forward end of a longitudinal member of the vehicle and engaging a deformable crush can therewith such that at least part of the crush can is disposed within an end of the longitudinal member.

23. A method of adapting a vehicle to decrease the vehicle's package space wherein the mounting member further comprises any of the features of claims 2 to 11.

24. A method of adapting a vehicle to decrease the vehicle's package space wherein the crush can further comprises any of the features of claims 12 to 19.
